# EUROPÄISCHE PATENTSCHRIFT

(11) **EP 3 844 557 B1**
(45) Veröffentlichungstag und Bekanntmachung des Hinweises auf die Patenterteilung: **19.02.2025**
(21) Anmeldenummer: 19765202.7
(22) Anmeldetag: 30.08.2019
(51) Int. Cl.: G02B 27/01

(54) **HEAD MOUNTED DISPLAY SOWIE VERGNÜGUNGSEINRICHTUNG MIT EINEM SOLCHEN HEAD MOUNTED DISPLAY**
HEAD-MOUNTED DISPLAY AND AMUSEMENT DEVICE HAVING A HEAD-MOUNTED DISPLAY OF THIS TYPE
AFFICHAGE TÊTE HAUTE AINSI QUE DISPOSITIF DE DIVERTISSEMENT DOTÉ D'UN TEL AFFICHAGE TÊTE HAUTE

(30) Priorität: 30.08.2018 DE 102018121258
(43) Veröffentlichungstag der Anmeldung: 07.07.2021
(73) Patentinhaber: VR Coaster GmbH & Co. KG, 67663 Kaiserslautern (DE)
(72) Erfinder: FAUL, Thomas, 67663 Kaiserslautern (DE)
(74) Vertreter: Westphal, Mussgnug & Partner Patentanwälte mbB
(86) Internationale Anmeldenummer: PCT/EP2019/073213
(87) Internationale Veröffentlichungsnummer: WO 2020/043879

(56) Entgegenhaltungen:
- WO-A1-2017/136043
- WO-A1-2019/184751
- CN-A- 106 444 046
- CN-A- 108 445 633

## Beschreibung

Die vorliegende Erfindung betrifft ein Head Mounted Display (HMD) mit den Merkmalen des Patentanspruchs 1, welches für den Innen- und Außeneinsatz verbesserte Eigenschaften und eine verbesserte Widerstandsfähigkeit gegen die Einstrahlung von natürlichem Sonnenlicht aufweist. Darüber hinaus betrifft die vorliegende Erfindung eine Vergnügungseinrichtung, insbesondere ein Freiluftfahrgeschäft, eine Achterbahn oder ein Karussell mit den Merkmalen des Patentanspruchs 6 aufweisend wenigstens ein solches Head Mounted Display.

Head Mounted Displays, nachfolgend HMDs genannt, sind aus dem Stand der Technik in unterschiedlichen Ausgestaltungen bekannt und dienen der Anzeige künstlich erzeugter Darstellungen im Sichtbereich des Anwenders. Hierfür können die HMDs auf dem Kopf und vor den Augen einer Person positioniert oder befestigt werden, wobei das Bild einen möglichst großen Bereich im Sichtfeld der Person abdecken kann. Diese Art von Darstellungsgeräten wird vor allem im Bereich der VR-Brillen zur Erzeugung einer virtuellen Realität eingesetzt. In diesem Fall kann die Darstellung einer virtuellen Realität auch in Abhängigkeit von der Position und/oder der Ausrichtung der VR-Brille synchron zu der Kopfbewegung der Person in Echtzeit angepasst werden. Auch kann die optische Realität von einer Kamera aufgenommen werden und in der Darstellung des HMDs durch Einspielen von Augmented-Reality-Effekten erweitert werden.

HMDs umfassen typischerweise ein Gehäuse mit einem Innenraum. In dem Innenraum ist entweder eine zweigeteilte Anzeigeeinheit oder zwei Anzeigeeinheiten angeordnet, deren erzeugte Darstellung von der Person durch jeweils eine optische Linse pro Auge erfasst werden kann. Die jeweilige Anzeigeeinheit umfasst typischerweise eine Hintergrundbeleuchtung, einen ersten Polarisator, eine LCD-Einheit und einen zweiten Polarisator. Die LCD-Einheit umfasst zwei Elektroden, welche auf den jeweils gegenüberliegenden Seiten angeordnet sind und durch welche der sich zwischen den Elektroden befindende Flüssigkristall derart beeinflusst werden kann, dass die Polarisation des durch den Flüssigkristall strahlenden Lichtes gedreht wird.

In Abhängigkeit der Polarisation des durch die LCD-Einheit austretenden Lichtes können Lichtstrahlen der Hintergrundbeleuchtung durch den zweiten Polfilter austreten und dementsprechend durch die Augen der Person wahrgenommen werden.

Im Stand der Technik hat sich der Einsatz derartiger HMDs bewährt. Insbesondere für die Verwendung von HMDs wurde eine Vielzahl von Anwendungen entwickelt, welche beispielsweise den Erlebniswert von Vergnügungseinrichtungen, insbesondere Freiluftfahrgeschäften, Achterbahnen, Karussells oder dergleichen erhöht. Derartige Vergnügungseinrichtungen befinden sich häufig außerhalb geschlossener Räume, wodurch die HMDs allen möglichen Umweltbedingungen ausgesetzt sind. Neben einem großen möglichen Temperatureinsatzbereich müssen die HMDs staub- und feuchtigkeitsdicht sein, um ein VR-Erlebnis in einer Vergnügungseinrichtung bei sämtlichen Wetterbedingungen erleben zu können.

Als Nachteil hat sich herausgestellt, dass die aus dem Stand der Technik bekannten HMDs, insbesondere wenn sie außerhalb geschlossener Räume verwendet werden, aber auch wenn sie im Innenraum hinter einem Fenster abgelegt und so Sonneneinstrahlung ausgesetzt wurden, Beschädigungen in Form von bleibenden hellen Flecken auf der Anzeigeeinheit aufweisen. Es hat sich herausgestellt, dass beim Ablegen von HMDs im Bereich von einstrahlendem Sonnenlicht das Licht durch die optischen Linsen in den Innenraum des Gehäuses des HMDs eindringt und die Anzeigeeinheit zerstört. Das Sonnenlicht wird durch die optische Linse gebündelt und trifft gebündelt im Bereich des Brennpunktes auf die Anzeigeeinheit, welche in Folge der Hitzeeinwirkung zerstört wird.

Hier setzt die vorliegende Erfindung an.

Der Erfindung liegt die Aufgaben zugrunde, ein verbessertes HMD zur Verfügung zu stellen, das zweckmäßigerweise die Nachteile der aus dem Stand der Technik bekannten HMDs beseitigt und für den Außeneinsatz insbesondere für Vergnügungseinrichtungen, Achterbahnen und Karussells aber auch für die Heimanwendung in Innenräumen geeignet ist. Das erfindungsgemäße HMD soll unempfindlich gegenüber direkter Sonneneinstrahlung sein. Typischerweise treten Sonnenstrahlen immer dann in das HMD ein, wenn eine Person, beispielweise ein Fahrgast einer Vergnügungseinrichtung, das HMD vor oder nach dem Erlebnis in einer Vergnügungseinrichtung auf- bzw. absetzt, aber auch, wenn das HMD im Innenraumgebrauch vor einem Fenster oder in einem Raum mit einer hohen Lichtintensität abgelegt wird.

Diese Aufgaben werden erfindungsgemäß durch ein HMD mit den Merkmalen des Patentanspruchs 1 gelöst. Darüber hinaus werden diese Aufgaben erfindungsgemäß durch eine Vergnügungseinrichtung mit den Merkmalen des Patentanspruchs 6 gelöst.

Die Unteransprüche haben weitere vorteilhafte Ausgestaltungen der Erfindung zum Inhalt.

Das erfindungsgemäße HMD umfasst ein Gehäuse mit einem Innenraum, mindestens eine optische Linse mit einer im Brennpunkt liegenden Brennpunktebene, die innerhalb des Gehäuses angeordnet ist, wenigstens einen ersten Polfilter mit einer ersten Polarisationsrichtung und einen zweiten Polfilter mit einer zweiten Polarisationsrichtung und wenigstens eine LCD-Einheit, wobei die wenigstens eine LCD-Einheit im Bereich der Brennpunktebene zwischen dem ersten Polfilter und dem zweiten Polfilter angeordnet ist und wobei der erste Polfilter und/oder der zweite Polfilter beabstandet zu der Brennpunktebene bzw. der LCD-Einheit und thermisch entkoppelt angeordnet ist, bzw. sind.

Das vorliegende erfindungsgemäße HMD beruht auf der überraschenden Erkenntnis, dass die eintretenden Lichtstrahlen durch die optische Linse gebündelt werden und nicht die LCD-Einheit zerstören, sondern lediglich der erste Polfilter und/oder der zweite Polfilter durch Hitzeeinwirkungen beschädigt werden, bzw. wird. Demnach beruht das erfindungsgemäße HMD auf der Maßnahme, den ersten Polfilter und/oder den zweiten Polfilter beabstandet von der in dem Brennpunkt liegenden Brennpunktebene anzuordnen. Dadurch wird die durch die eintretenden Lichtstrahlen resultierende thermische Belastung so weit reduziert, dass das HMD unbeschadet und ungehindert Sonneneinstrahlung ausgesetzt werden kann.

Eine weitere vorteilhafte Ausgestaltung der vorliegenden Erfindung sieht vor, dass zwischen der LCD-Einheit und dem ersten Polfilter und/oder dem zweiten Polfilter eine Trennspalte angeordnet ist. Die Trennspalte dient der thermischen und/oder mechanischen Entkopplung des ersten Polfilters und/oder des zweiten Polfilters. Dadurch ist einerseits ein ausreichender Abstand zwischen dem ersten Polfilter und/oder dem zweiten Polfilter zu der Brennpunktebene der optischen Linse eingestellt und andererseits wird ein Wärmetransport zwischen der LCD-Einheit und dem jeweiligen Polfilter reduziert. Besonders bevorzugt ist die Trendspalte mit einem gasförmigen Medium gefüllt, wobei besonders bevorzugt der gesamte Innenraum des Gehäuses mit dem gasförmigen Medium gefüllt ist. Das Medium ist weiter bevorzugt ein nicht reaktives Gas, bevorzugt ist ein gereinigtes Gas, ein technisches Gas oder ein Gasgemisch.

Erfindungsgemäß ist es, wenn der wenigstens eine zweite Polfilter auf der der wenigstens einen LCD-Einheit zugewandten Seite der wenigstens einen optischen Linse angeordnet ist. Hierzu kann der zweite Polfilter unmittelbar auf der optischen Linse aufgebracht bzw. angeordnet sein oder alternativ innerhalb der optischen Linse angeordnet werden. Insbesondere hat es sich als vorteilhaft erwiesen, wenn der Polfilter zwischen der wenigstens einen optischen Linse und der LCD-Einheit äquidistant zu der optischen Linse zur Vermeidung von Lichtbrechungen angeordnet ist. Die durch die optische Linse hindurchtretenden Lichtstrahlen treffen bzw. passieren demnach jeweils senkrecht den Polfilter.

Ferner sieht die Erfindung vor, dass die erste Polarisationsrichtung des ersten Polfilters und die zweite Polarisationsrichtung des zweiten Polfilters ungleich sind. Insbesondere ist bevorzugt, wenn der erste Polfilter und der zweite Polfilter Linearpolfilter sind und die erste Polarisationsrichtung senkrecht zu der zweiten Polarisationsrichtung ausgerichtet ist.

Insbesondere für die Verwendung von Vergnügungseinrichtungen in Außenräumen bzw. im Freien hat es sich als vorteilhaft erwiesen, wenn der Innenraum des Gehäuses durch die wenigstens eine optische Linse verschlossen ist. Nach Maßgabe der Erfindung soll das HMD hinreichend sowohl gegen Spritzwasser z.B. Regen als auch Staub geschützt sein, und in einem einfachen Reinigungsverfahren für die Wiederverwendung in der Vergnügungseinrichtung desinfizierbar bzw. reinigbar sein. Einerseits kann somit eine hygienisch bedenkenlose Wiederverwendung in einer Vergnügungseinrichtung bewerkstelligt werden und andererseits können keine Fremdkörper in den Innenraum des Gehäuses gelangen, die die erzeugte Darstellung negativ beeinflussen.

Insbesondere ist vorteilhaft, wenn das Gehäuse für die Außenanwendung mindestens dem Standard IP 4x entspricht, wobei besonders bevorzugt ein höherer Schutzstandard als IP4X gegen Fremdkörper realisiert werden sollte. Insbesondere ist bevorzugt, wenn der Schutzstandard mindestens IP 6kX entspricht. Weiterhin ist es besonders vorteilhaft, wenn das HMD für die Außenanwendung mindestens der Schutzart gegen Wasser IPX4 entspricht, wobei weiter bevorzugt mindestens IPX4k und weiter bevorzugt IPX6 aufweist.

Ein weiterer Aspekt der vorliegenden Erfindung betrifft eine Vergnügungseinrichtung, insbesondere ein Freiluftfahrgeschäft, eine Achterbahn oder ein Karussell aber auch eine Vergnügungseinrichtung für die Heimanwendung in Innen- und Außenräumen, mit wenigstens einem HMD, wobei das HMD bevorzugt als VR-Brille eingesetzt wird und ein Gehäuse mit einem Innenraum, mindestens eine optische Linse mit einer im Brennpunkt liegenden Brennpunktebene, die innerhalb des Innenraums des Gehäuses angeordnet ist, aufweist. Darüber hinaus weist das HMD wenigstens einen ersten Polfilter mit einer ersten Polarisationsrichtung und einen zweiten Polfilter mit einer zweiten Polarisationsrichtung auf und wenigstens eine LCD-Einheit, wobei die wenigstens eine LCD-Einheit im Bereich der Brennpunktebene zwischen dem ersten Polfilter und dem zweiten Polfilter angeordnet ist und wobei der erste Polfilter und/oder der zweite Polfilter beabstandet und thermisch entkoppelt zu der Brennpunktebene angeordnet ist bzw. sind. Die Vergnügungseinrichtung mit dem erfindungsgemäßen HMD kann besonders wirtschaftlich betrieben werden, da die zu erwartende Lebensdauer eines erfindungsgemäßen HMDs deutlich erhöht ist und durch die entsprechende Ausgestaltung des HMDs dieses nach der Verwendung in der Vergnügungseinrichtungen wirtschaftlich und hygienisch gereinigt bzw. desinfiziert werden kann, um zeitnah in der Vergnügungseinrichtungen wiederverwendet werden zu können.

Nach Maßgabe einer weiteren vorteilhaften Ausgestaltung der vorliegenden Erfindung ist vorgesehen, dass das HMD mittels einer kabelgebundenen und/oder kabellosen Schnittstelle mit der Vergnügungseinrichtung verbunden ist, wobei die Vergnügungseinrichtung eine zentrale oder eine Vielzahl dezentraler Datenverarbeitungsanlagen aufweist, die eine in dem jeweiligen HMD angezeigte virtuelle Realität erzeugt bzw. erzeugen. Besonders vorteilhaft ist dabei, wenn die erfindungsgemäße Vergnügungseinrichtung Mittel umfasst, durch die HMDs nach der Verwendung durch einen Fahrgast gereinigt bzw. desinfiziert werden können.

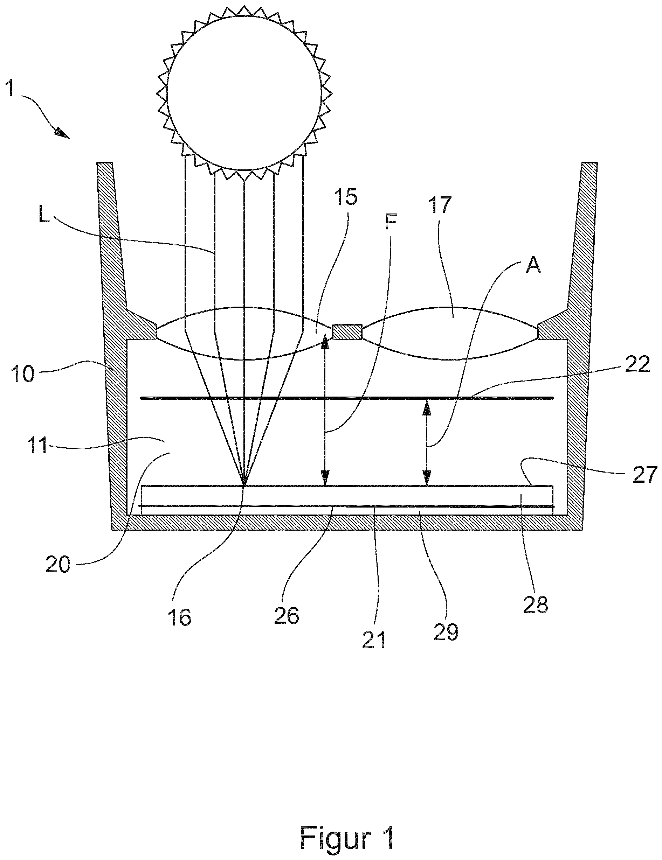

Nachfolgend wird unter Bezugnahme auf die begleitenden Zeichnungen ein beispielhaftes und erfindungsgemäßes Ausführungsbeispiel im Detail erläutert. Es zeigt
- Figur 1: eine schematische, teilweise geschnittene Darstellung eines Head Mounted Displays (HMDs), das für die stereographische Darstellung einer virtuellen Realität ausgebildet ist.

Figur 1 ist eine schematische Darstellung eines Head Mounted Displays 1, nachfolgend HMD 1 genannt, zu entnehmen, welches eingerichtet ist, auf den (nicht dargestellten) Kopf einer Person aufgesetzt zu werden. Das HMD 1 kann beispielsweise eine VR-Brille sein und die optische Realität im aktuellen Sichtfeld der Person durch eine bevorzugt stereoskopische Darstellung einer weiter bevorzugt künstlich erzeugten Darstellung, einer sogenannten virtuellen Realität, ersetzen.

Hierzu umfasst das HMD 1 ein Gehäuse 10, welches beispielsweise mittels (nicht dargestellten) Befestigungsmitteln an dem Kopf bzw. dem Körper der Person befestigt werden kann und derart vor den Augen der Person positioniert ist, dass deren Sichtfeld vollständig durch das Gehäuse 10 abgedeckt ist.

Das Gehäuse 10 ist bevorzugt topfförmig ausgestaltet und umfasst zwei optische Linsen 15, 17, welche jeweils einem Auge der Person zugeordnet sind. Das Gehäuse 10 schließt einen Innenraum 11 ein, der durch die zwei optischen Linsen 15, 17 gegen Fremdkörper, insbesondere Staub, sowie Wasser, insbesondere Spritzwasser oder Regen, verschlossen ist.

Die beiden optischen Linsen 15, 17 sind im dargestellten Ausführungsbeispiel Sammellinsen, die jeweils einen auf einer Brennpunktebene 5 liegenden Brennpunkt 16, 18 aufweisen, welche auf der dem Innenraum 11 zugewandten Seite des Innenraums 11 des Gehäuses 10 angeordnet sind.

In dem Innenraum 11 des Gehäuses 10 ist von der Umgebung geschützt wenigstens ein erster Polfilter 21 mit einer ersten Polarisationsrichtung, eine LCD-Einheit 25, ein zweiter Polfilter 22 mit einer zweiten Polarisationsrichtung und eine Hintergrundbeleuchtung 29 vorgesehen, wobei die von der Hintergrundbeleuchtung 29 abgegebenen Lichtstrahlen L zunächst zu dem ersten Polfilter 21 gelangen, die LCD-Einheit 25 und den zweiten Polfilter 22 durchstrahlen bevor sie zu der optischen Linse 15, 17 gelangen können. Der erste Polfilter 21 und der zweite Polfilter 22 sind lineare Polarisationsfilter und die erste Polarisationsrichtung und die zweite Polarisationsrichtung sind zueinander verdreht, wobei die erste Polarisationsrichtung zu der zweiten Polarisationsrichtung bevorzugt um 90° verdreht ist.

Während die Hintergrundbeleuchtung 29 nicht-polarisiertes Licht abgibt, durchströmt das von der Hintergrundbeleuchtung 29 abgegebene Licht zunächst den ersten Polfilter 21, welcher in einer Polarisationsrichtung das Licht linear polarisiert. Anschließend folgt die LCD-Einheit 25, welche aus einer ersten Elektrode 26 und einer zweiten Elektrode 27 besteht, wobei zwischen der ersten Elektrode 26 und der zweiten Elektrode 27 ein Flüssigkristall 28 angeordnet ist, welcher in Abhängigkeit von der Bestromung der ersten und zweiten Elektrode 26, 27 die Polarisationsebene des Lichtes verdreht, so dass in Abhängigkeit von der Bestromung der Elektroden 26, 27 Einfluss auf die Polarisation des Lichts genommen werden kann, und eingestellt werden kann, ob Licht den zweiten Polfilter 22 durchdringt oder nicht.

Damit die für die Person erzeugte Darstellung in einer ausreichenden Schärfe wahrnehmbar ist, muss die LCD-Einheit 25 im Bereich des Brennpunktes 16, 18 der jeweiligen optischen Linse 15, 17 angeordnet sein.

In dem in Figur 1 dargestellten Ausführungsbeispiel ist der erste Polfilter 21 unmittelbar benachbart zu der LCD-Einheit 25 auf der der Hintergrundbeleuchtung 29 zugewandten Seite angeordnet. Der zweite Polfilter 22 ist dagegen beabstandet zu der LCD-Einheit 25 und der Brennpunktebene 5 angeordnet. Zwischen der LCD-Einheit 25 und dem zweiten Polfilter 22 ist ein Trendspalt 20 ausgebildet, durch den der zweite Polfilter 22 thermisch sowie mechanisch von der LCD-Einheit 25 entkoppelt ist. Die thermische Entkopplung verhindert einen Wärmetransport zwischen der LCD-Einheit 25 und dem zweiten Polfilter 22 durch einen hohen Wärmewiderstand.

Der Trendspalt 20 zwischen dem zweiten Polfilter 22 und der LCD-Einheit 25 kann durch ein (nicht dargestelltes) Medium gefüllt werden, welches besonders bevorzugt ein gasförmiges Medium ist. Weiter bevorzugt ist das Medium ein nicht reaktives Gas oder ein Gasgemisch mit einer geringen Wärmeleitfähigkeit.

Der Abstand A zwischen der Brennpunktebene 5 bzw. der LCD-Einheit 25 und dem zweiten Polfilter 22 beträgt dabei bevorzugt mindestens 1/25 der Brennweite F, also des Abstandes zwischen der Brennpunktebene und der jeweiligen optischen Linse 15, 17, wobei der Abstand A zwischen der Brennpunktebene 5 und dem zweiten Polfilter 22 beliebig größer ausgestaltet werden kann. Demnach sollte A ≥ 1/25*F sein.

Beispielsweise kann vorgesehen sein, dass der zweite Polfilter 22 auch unmittelbar auf der der LCD-Einheit 25 zugewandten Seite der optischen Linse 15, 17 angeordnet ist. Insbesondere ist bevorzugt, wenn der zweite Polfilter 22 derart ausgebildet ist, dass die durch die optische Linse 15, 17 tretenden Lichtstahlen L stets senkrecht durch den zweiten Polfilter 22 hindurchtreten, wodurch eine Lichtbrechung reduziert ist. Dies wird insbesondere dadurch erreicht, wenn der zweite Polfilter 22 eine der optischen Linse 15, 17 entsprechende Krümmung aufweist.

Das HMD 1 kann eine geeignete Sensorik umfassen, durch welche die Bewegungen der Person bzw. die Bewegungen des Kopfes der Person erfasst werden können. Darüber hinaus kann das HMD 1 eine kabellose und/oder kabelgebundene Schnittstelle aufweisen, durch welche das HMD 1 mit einer eine virtuelle Realität erzeugenden Datenverarbeitungsanlage der Vergnügungseinrichtung 2 verbunden werden kann. Nach Maßgabe der vorliegenden Erfindung kann besonders bevorzugt die Datenverarbeitungsanlage eine vergnügungseinrichtungsspezifische virtuelle Realität erzeugen, welche auf dem entsprechenden HMD wiedergegeben wird.

### Bezugszeichenliste

- 1: HMD
- 2: Vergnügungseinrichtung
- 5: Brennpunktebene
- 10: Gehäuse
- 11: Innenraum
- 15: Linse
- 16: Brennpunkt
- 17: Linse
- 18: Brennpunkt
- 20: Trendspalt
- 21: erster Polfilter
- 22: zweiter Polfilter
- 25: LCD-Einheit
- 26: erste Elektrode
- 27: zweite Elektrode
- 28: Flüssigkristall
- 29: Hintergrundbeleuchtung
- A: Abstand
- F: Brennweite von 15, 17
- L: Lichtstrahl

## Patentansprüche

1. HMD (1) aufweisend:
- ein Gehäuse (10) mit einem Innenraum (11),
- mindestens eine optische Linse (15, 17) mit einer im Innenraum (11) des Gehäuses (10) in einem Brennpunkt (16, 18) liegenden Brennpunktebene (5),
- wenigstens einen ersten Polfilter (21) mit einer ersten Polarisationsrichtung und einen zweiten Polfilter (22) mit einer zweiten Polarisationsrichtung, und
- wenigstens eine LCD-Einheit (25),
- wobei die wenigstens eine LCD-Einheit (25) im Bereich der Brennpunktebene (5) zwischen dem ersten Polfilter (21) und dem zweiten Polfilter (22) angeordnet ist, und
- wobei der erste Polfilter (21) und der zweite Polfilter (22) beabstandet zu der Brennpunktebene (5) angeordnet sind,
- wobei der wenigstens eine zweite Polfilter (22) unmittelbar auf der der wenigstens einen LCD-Einheit (25) zugewandten Seite der wenigstens einen optischen Linse (15, 17) oder innerhalb der optischen Linse (15, 17), oder zwischen der wenigstens einen optischen Linse (15, 17) und der LCD-Einheit (25) äquidistant zu der optischen Linse zur Vermeidung von Lichtbrechungen angeordnet ist, und
- wobei die erste Polarisationsrichtung und die zweite Polarisationsrichtung ungleich sind, vorzugsweise um 90° verdreht.

2. HMD (1) nach Anspruch 1,
**dadurch gekennzeichnet, dass** zwischen der LCD-Einheit (25) und dem ersten Polfilter (21) und/oder dem zweiten Polfilter (22) eine Trennspalte (20) angeordnet ist.

3. HMD (1) nach einem der vorgenannten Ansprüche,
**dadurch gekennzeichnet, dass** auf der von der optischen Linse (15, 17) abgewandten Seite der LCD-Einheit (25) eine Hintergrundbeleuchtung (29) angeordnet ist.

4. HMD (1) nach einem der vorgenannten Ansprüche,
**dadurch gekennzeichnet, dass** der Innenraum (11) des Gehäuses (10) durch die wenigstens eine optischen Linse (15, 17) verschlossen ist.

5. HMD (1) nach einem der vorgenannten Ansprüche,
**dadurch gekennzeichnet, dass** das HMD (1) mindestens eine Schutzklasse IP4X gegen Fremdkörper und/oder eine Schutzklasse gegen Wasser von mindestens IPX4 aufweist.

6. Vergnügungseinrichtung (2), insbesondere ein Freiluftfahrgeschäft, eine Achterbahn oder ein Karussell, mit wenigstens einem HMD (1) nach einem der vorgenannten Ansprüche.

7. Vergnügungseinrichtung (2) nach Anspruch 6,
**dadurch gekennzeichnet, dass** das HMD (1) mit der Vergnügungseinrichtung (2) über eine kabelgebundene Schnittstelle verbunden ist, oder dass das HMD (1) über eine kabellose Schnittstelle mit der Vergnügungseinrichtung (2) verbunden ist.

## Claims

1. HMD (1) comprising:
- a housing (10), having an inner chamber (11),
- at least one optical lens (15, 17), having a focal plane (5) which is in a focal point (16, 18) in the inner chamber (11) of the housing (10),
- at least one polarization filter (21), having a first polarization direction, and a second polarization filter (22), having a second polarization direction, and
- at least one LCD unit (25),
- wherein the at least one LCD unit (25) is arranged in the region of the focal plane (5) between the first polarization filter (21) and the second polarization filter (22), and
- wherein the first polarization filter (21) and the second polarization filter (22) are arranged at a distance to the focal plane (5),
- wherein the at least one second polarization filter (22) is arranged directly on the side of the at least one optical lens (15, 17) which faces the at least one LCD unit (25), or inside of the optical lens (15, 17), or equidistantly to the optical lens between the at least one optical lens (15, 17) and the LCD unit (25), in order to prevent light refraction, and
- wherein the first polarization direction and the second polarization direction are unequal, preferably rotated through 90°.

2. HMD (1) in accordance with claim 1,
**characterized in that**
a break field (20) is arranged between the LCD unit (25) and the first polarization filter (21) and/or the second polarization filter (22).

3. HMD (1) in accordance with either of the preceding claims,
**characterized in that**
a background light (29) is arranged on the side of the LCD unit (25) which faces away from the optical lens (15, 17).

4. HMD (1) in accordance with any of the preceding claims,
**characterized in that**
the inner chamber (11) of the housing (10) is closed off by means of the at least one optical lens (15, 17).

5. HMD (1) in accordance with any of the preceding claims,
**characterized in that**
the HMD (1) comprises a protection class against foreign particles of at least IP4X and/or a protection class against water of at least IPX4.

6. Amusement facility (2), in particular an open air amusement ride, a roller coaster or a carousel having at least one HMD (1) in accordance with any of the preceding claims.

7. Amusement facility (2) in accordance with claim 6,
**characterized in that**
the HMD (1) is connected to the amusement facility (2) by means of a wired interface, or **in that** the HMD (1) is connected to the amusement facility (2) by means of a wireless interface.

## Revendications

1. Affichage tête haute HMD (1) comprenant :
- un boîtier (10) avec un volume intérieur (11),
- au moins une lentille optique (15, 17) avec un plan focal (5) situé au foyer (16, 18) dans le volume intérieur (11) du boîtier (10),
- au moins un premier filtre polarisant (21) ayant une première direction de polarisation et un second filtre polarisant (22) avec une seconde direction de polarisation, et
- au moins une unité LCD (25),
- cette unité LCD (25) étant installée dans la zone du plan focal (5) entre le premier filtre polarisant (21) et le second filtre polarisant (22), et
- le premier filtre polarisant (21) et le second filtre polarisant (22) sont écartés du plan focal (5),
- au moins le second filtre polarisant (22) est installé directement sur le côté tourné vers au moins une unité LCD (25) de la lentille optique (15, 17) ou à l'intérieur de la lentille optique (15, 17) ou entre au moins une lentille optique (15, 17) et l'unité LCD (25) de façon équidistante par rapport à la lentille optique pour éviter la diffraction, et
- la première direction de polarisation et la seconde direction de polarisation étant différentes et, de préférence, elles sont tournées de 90°.

2. Affichage tête haute HMD (1) selon la revendication 1,
**caractérisé par**
in intervalle de séparation (20) entre l'unité LCD (25) et le premier filtre polarisant (21) et/ou le second filtre polarisant (22).

3. Affichage tête haute HMD (1) selon l'une des revendications précédentes,
**caractérisé en ce que**
un rétroéclairage (29) est prévu sur le côté de l'unité LCD (25) à l'opposé de la lentille optique (15, 17).

4. Affichage tête haute HMD (1) selon l'une des revendications précédentes,
**caractérisé en ce que**
le volume intérieur (11) du boîtier (10) est fermé par au moins la lentille optique (15, 17).

5. Affichage tête haute HMD (1) selon l'une des revendications précédentes,
**caractérisé en ce que**
l'unité HDM (1) a au moins un indice de protection IP4X contre les corps étrangers et/ou un indice de protection pour résister à l'eau d'au moins IPX4.

6. Installation de loisir (2) notamment bateau à l'air libre, grand huit ou carrousel ayant au moins une unité d'affichage tête haute HMD (1) selon l'une des revendications précédentes.

7. Installation de loisir (2) selon la revendication 6,
**caractérisée en ce que**
l'unité d'affichage tête haute HMD (1) est reliée à l'installation de loisir (2) par une interface par câble ou **en ce que** l'unité d'affichage tête haute HMD (1) est reliée à l'installation de loisir (2) par une interface sans câble.
